# EUROPÄISCHE PATENTSCHRIFT

(11) **EP 0 725 071 B1**
(45) Veröffentlichungstag und Bekanntmachung des Hinweises auf die Patenterteilung: **19.07.2000**
(21) Anmeldenummer: 96100325.8
(22) Anmeldetag: 11.01.1996
(51) Int. Cl.: C07F 9/40

(54) **Verfahren zur Herstellung von Alkalimetallsalzen von Phosphonsäuremonomethylestern**
Process for preparing alkaline metal salts of phosphonic acids mono methyl esters
Procédé de préparation de sels de métaux alcalins de monométhyl esters d'acides phosphoniques

(30) Priorität: 26.01.1995 DE 19502331
(43) Veröffentlichungstag der Anmeldung: 07.08.1996
(73) Patentinhaber: Ticona GmbH, 65451 Kelsterbach (DE)
(72) Erfinder: Kleiner, Hans-Jerg, Dr., D-61476 Kronberg (DE)

(56) Entgegenhaltungen:
- EP-A- 0 029 172
- EP-A- 0 299 922
- EP-A- 0 310 559
- EP-A- 0 327 496
- DE-A- 2 256 835
- JOURNAL OF ORGANOMETALLIC CHEMISTRY, Bd. 12, 1968, LAUSANNE CH, Seiten 459-470, XP000569133 H. CHRISTOL: "Hydolyse basique de phosphonates. I. Etude qualitative"

## Beschreibung

Die Erfindung betrifft ein Verfahren zur Herstellung von Alkalimetallsalzen von Phosphonsäuremonomethylestern.

Alkalimetallsalze von Phosphonsäuremonomethylestern sind wertvolle Mittel zur Flammhemmung (siehe z.B. EP-PS 0 245 207). Weiterhin können aus ihnen leicht die Phosphonsäuremonomethylester gewonnen werden, die als Ausgangsstoffe für andersgeartete Salze der entsprechenden Phosphonsäuremonomethylester sehr wertvoll sind, z.B. zur Herstellung von Melaminsalzen (EP-OS 367 714) oder Lithium- oder Aluminiumsalzen (EP-OS 321 002; EP-OS 356 633; EP-OS 430 876; EP-OS 550 211).
Die Alkalisalze von Phosphonsäuremonomethylestern können hergestellt werden durch Umsetzung von Phosphonsäuredimethylestern mit feingemahlenen Alkalimetallhalogeniden, dabei erhält man als Folgeprodukt zwangsläufig Methylchlorid, das infolge seines cancerogenen Potentials sehr problematisch und als Gas nicht einfach zu handhaben ist (EP-OS 310 559). Weiterhin können diese Salze hergestellt werden durch Umsetzung von Phosphonsäuredimethylestern mit den Alkalimetallen (EP-OS 299 922). Der Umgang mit Alkalimetallen wie Lithium oder Natrium im technischen Maßstab erfordert aufwendige Sicherheitsmaßnahmen.
Am einfachsten erscheint die partielle Hydrolyse mit Alkalilauge in Wasser. So erfolgt die Herstellung des Natriumsalzes des Methanphosphonsäuremonomethylesters durch partielle alkalische Hydrolyse des Methanphosphonsäuredimethylesters in Wasser oder in einem Dioxan-Wasser-Gemisch mit Natronlauge (H. Cristol et al., J. Organometallic Chem. 12, 459 (1968). Dabei wird bei Verwendung einer 4 %igen Natronlauge mit deutlichen Überschüssen an Natronlauge gearbeitet, auf 0,03 Mol Phosphonat 0,08 Mol Natronlauge in einem Wasser/Dioxan 50:50-Gemisch. Dieses Verfahren ist aus technischer Sicht nicht unproblematisch, insbesondere ist die starke Verdünnung der Lauge, der Überschuß an Lauge und die Verwendung eines zusätzlichen wasserlöslichen Lösungsmittels von Nachteil. Die Herstellung von Lithiumsalzen von Phosphonsäuremethylestern ist in der EP 321 002 beschrieben. Auch hier wird mit großen Wassermengen gearbeitet. Es wird ausdrücklich darauf hingewiesen, daß diese Methode für die Herstellung von Natriumsalzen ungeeignet ist.
Es bestand daher ein Bedarf, ein Verfahren zu entwickeln, das die vorstehend genannten Nachteile vermeidet, sich technisch ohne großen Aufwand realisieren läßt und darüber hinaus die gewünschten Produkte sowohl in hoher Ausbeute als auch in hoher Reinheit zugänglich macht.

Diese Aufgabe wird überraschenderweise gelöst durch ein Verfahren zur Herstellung von Alkalimetallsalzen von Phosphonsäuremonomethylestern der Formel I 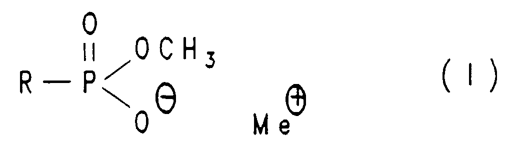 worin
- R: (C₁-C₁₄)-Alkyl und
- Me: Natrium oder Kalium bedeuten,
dadurch gekennzeichnet, daß man 20 bis 50 %ige Alkalilauge im Molverhältnis 1:1 in, gegebenenfalls in Wasser gelöste, Phosphonsäuredimethylester der Formel (II), 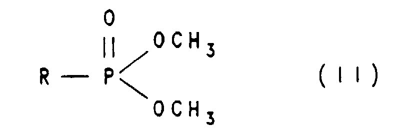 wobei die Gesamtwassermenge von Alkalihydroxidlösung und Phosphonsäuredimethylesterlösung maximal 100 Gew.-%, bezogen auf das Gewicht von Alkalihydroxid und Phosphonsäuredimethylester, ist, bei 90 bis 130°C eindosiert und das gebildete Methanol abdestilliert.

Wichtig ist das Verfahren zur Umsetzung von Verbindungen der Formel (I), worin R für (C₁-C₆) Alkyl, insbesondere (C₁-C₃) Alkyl steht.

Von besonderem Interesse ist die Umsetzung von Methanphosphonsäuredimethylester, Propanphosphonsäuredimethylester, Isopropylphosphonsäuredimethylester, Oktanphosphonsäuredimethylester und Tetradekanphosphonsäuredimethylester. Es können auch Gemische von Phosphonsäuredimethylestern eingesetzt werden.

Besonders vorteilhaft läßt sich das Verfahren durchführen, wenn der Gesamtwassergehalt von Alkalihydroxidlösung und Phosphonsäuredimethylesterlösung zwischen 20 und 80 Gew.-%, insbesondere zwischen 30 und 70 Gew.-%, bevorzugt zwischen 40 und 60 Gew.-% bezogen auf das Gewicht von Alkalihydroxid und Phosphonsäuredimethylester ist. Es hat sich in vielen Fällen bewährt, bei einer Temperatur von 100 bis 115°C einzudosieren.

Die Eindosiergeschwindigkeit wird zweckmäßig so geregelt, daß ein pH-Wert von 10 nicht überschritten wird. Zum Ende der Umsetzung ist es zweckmäßig, die Dosierung langsamer zu gestalten.
Das gebildete Methanol destilliert im Zuge der Umsetzung.
Nach beendeter Umsetzung werden die gebildeten konzentrierten Lösungen der Alkalimetallsalze der Phosphonsäuremonomethylester gegebenenfalls von Restmenge Methanol und von Wasser destillativ befreit. Man erhält dann die gewünschten Endprodukte in praktisch quantitativer Ausbeute mit hoher Reinheit.
Durch bekannte Methoden gelingt es dann, falls gewünscht, die entsprechenden Phosphonsäuremonomethylester herzustellen.

### Beispiel 1

500 g (4,0 Mol) Methanphosphonsäuredimethylester und 80 g Wasser werden auf 100°C erwärmt und unter lebhaftem Rühren 320 g (4,0 Mol) 50 %ige Natronlauge eingetropft. Dabei wird die Temperatur langsam bis auf 115°C gesteigert. Insgesamt wird während 2 Stunden eingetropft, 90 % der Gesamtmenge in etwa 1 Stunde, die Restmenge in ebenfalls einer Stunde. 30 Min. wird das Reaktionsgemisch nachgerührt. Während der Reaktion destillieren ingesamt 139 g Methanol/Wassergemisch ab. Der Rückstand wird im Vakuum eingdampft. Man erhält nach Trocknung im Vakuum-Trockenschrank bei 80°C 528 g Methanphosphonsäuremonomethylesternatriumsalz mit einer 98 %igen Reinheit laut 31-P-NMR. Die Ausbeute beträgt 100 % d.Th.

### Beispiel 2

1750 g (14,1 Mol) Methanphosphonsäuredimethylester und 280 g Wasser werden auf 106°C erhitzt und unter lebhaftem Rühren eine Lösung von 929 g (14,1 Mol) 85 %igem Kaliumhydroxid in 560 g Wasser in 10 Stunden eingetropft. Dabei wird langsam die Temperatur auf 113°C erhöht. Während der Reaktion destillieren insgesamt 433 g Methanol/Wasser-Gemisch ab. Der Rückstand wird i.Vak. eingedampft. Man erhält nach Trocknung im Vakuum-Trockschrank bei 80°C 2080 g Methanphosphonsäuremonomethylesterkaliumsalz mit einer 99 %igen Reinheit laut 31-P-NMR. Die Ausbeute beträgt 100 % d.Th.

### Beispiel 3

485 g (3,19 Mol) Propanphosphonsäuredimethylester und 485 g (2,19 Mol) Oktanphosphonsäuredimethylester werden vermischt und auf 90°C erwärmt. Nun werden unter lebhaftem Rühren 1075 g (5,38 Mol) 20 %ige Natronlauge in ca. 23 Stunden eingetropft, gleichzeitig steigt die Temperatur bis auf 100°C. Über eine Vigreux-Kolonne destilliert ein Methanol/Wasser-Gemisch ab. Die verbleibende Lösung wird i. Vak. eingedampft. Man erhält ein Gemisch des Propanphosphonsäuremonomethylnatriumsalzes und des Oktanphosphansäuremonomethylnatriumsalzes mit einer jeweiligen Reinheit von ca. 95 %. Insgesamt erhält man 962 g der Salze, das entspricht einer Ausbeute von 95 % d.Th.

### Beispiel 4

973 g (6,4 Mol) Propanphosphonsäuredimethylester werden auf 90°C erwärmt und unter lebhaftem Rühren 1280 g (6,4 Mol) 20 %ige Natronlauge eingetropft. Dabei wird die Temperatur langsam auf 110°C gesteigert, gleichzeitig destillieren über eine Vigreux-Kolonne 238 g Methanol/Wasser-Gemisch ab. Die erhaltene Lösung wird i. Vak. eingedampft und der verbleibende Rückstand im Vakuum-Trockenschrank getrocknet. Man erhält 1020 g Propanphosphonsäuremonomethylesternatriumsalz mit einer Reinheit von 92 % laut 31-P-NMR. Das entspricht einer ca. 100 %igen Ausbeute.

## Patentansprüche

1. Verfahren zur Herstellung von Alkalimetallsalzen von Phosphonsäuremonomethylestern der Formel (I) 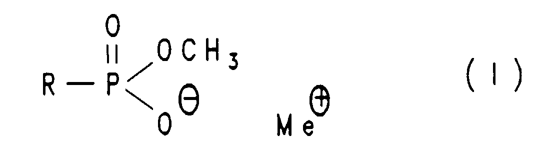 worin
R (C₁-C₁₄)-Alkyl und
Me Natrium oder Kalium bedeuten,
dadurch gekennzeichnet, daß man 20 bis 50 %ige Alkalilauge im Molverhältnis 1:1 in, gegebenenfalls in Wasser gelöste, Phosphonsäuredimethylester der Formel (II), 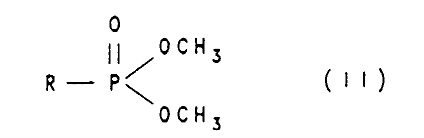 wobei die Gesamtwassermenge von Alkalihydroxidlösung und Phosphonsäuredimethylesterlösung maximal 100 Gew.-%, bezogen auf das Gewicht von Alkalihydroxid und Phosphonsäuredimethylester, ist, bei 90 bis 130°C eindosiert und das gebildete Methanol abdestilliert.

2. Verfahren nach Anspruch 1, dadurch gekennzeichnet, daß R (C₁-C₆)-Alkyl, insbesondere (C₁-C₃) Alkyl bedeutet.

3. Verfahren nach Anspruch 1, dadurch gekennzeichnet, daß Formel (II) für Methanphosphonsäuredimethylester, Propanphosphonsäuredimethylester, Isopropylphosphonsäuredimethylester, Oktanphosphonsäuredimethylester oder Tetradekanphosphonsäuredimethylester steht.

4. Verfahren nach mindestens einem der Ansprüche 1 bis 3, dadurch gekennzeichnet, daß der Gesamtwassergehalt von Alkalhydroxidlösung und Phosphonsäuredimethylesterlösung zwischen 20 und 80 Gew.-%, insbesondere zwischen 30 und 70 Gew.-%, bevorzugt zwischen 40 und 60 Gew.-%, bezogen auf das Gewicht von Alkalihydroxid und Phosphonsäuredimethylester, ist.

5. Verfahren nach mindestens einem der Ansprüche 1 bis 4, dadurch gekennzeichnet, daß bei 100 bis 115°C eindosiert wird.

6. Verfahren nach mindestens einem der Ansprüche 1 bis 5, dadurch gekennzeichnet, daß die Eindosiergeschwindigkeit so geregelt wird, daß ein pH-Wert von 10 nicht überschritten wird.

## Claims

1. A process for the preparation of an alkali metal salt of a phosphonic acid monomethyl ester of the formula (I) 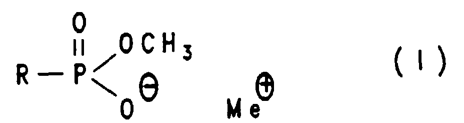 in which
R is (C₁-C₁₄)-alkyl and
Me is sodium or potassium,
which comprises metering 20 to 50% strength alkali metal hydroxide solution, in a molar ratio of 1:1, into phosphonic acid dimethyl esters of the formula (II) 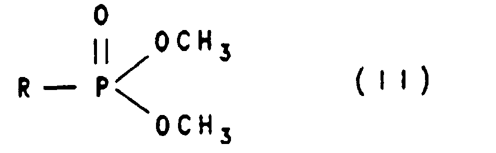 if appropriate dissolved in water, the total amount of water from the alkali metal hydroxide solution and phosphonic acid dimethyl ester solution being not more than 100% by weight, based on the weight of alkali metal hydroxide and phosphonic acid dimethyl ester, at 90 to 130°C and distilling off the methanol formed.

2. The process as claimed in claim 1, wherein R is (C₁-C₆)-alkyl, in particular (C₁-C₃)-alkyl.

3. The process as claimed in claim 1, wherein formula (II) is methanephosphonic acid dimethyl ester, propanephosphonic acid dimethyl ester, isopropylphosphonic acid dimethyl ester, octanephosphonic acid dimethyl ester or tetradecanephosphonic acid dimethyl ester.

4. The process as claimed in at least one of claims 1 to 3, wherein the total water content from the alkali metal hydroxide solution and phosphonic acid dimethyl ester solution is between 20 and 80% by weight, in particular between 30 and 70% by weight, preferably between 40 and 60% by weight, based on the weight of alkali metal hydroxide and phosphonic acid dimethyl ester.

5. The process as claimed in at least one of claims 1 to 4, wherein the alkali metal hydroxide solution is metered in at 100 to 115°C.

6. The process as claimed in at least one of claims 1 to 5, wherein the rate of metering in is regulated such that a pH of 10 is not exceeded.

## Revendications

1. Procédé de préparation de sels de métaux alcalins d'esters monométhyliques d'acide phosphonique de formule (I) 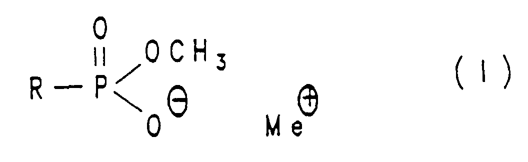 dans laquelle
R représente un alkyle en C₁-C₁₄ et
Me représente le sodium ou le potassium,
caractérisé en ce qu'une lessive alcaline à 20 à 50% est introduite en quantité mesurée, entre 90 et 130°C, à un rapport molaire de 1:1 dans des esters diméthyliques d'acide phosphonique de formule (II) éventuellement dissous dans l'eau, 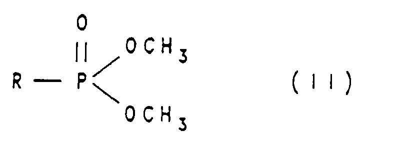 la quantité d'eau totale de la solution d'hydroxyde de métal alcalin et de la solution d'esters diméthyliques d'acide phosphonique étant au plus de 100% en poids, par rapport au poids de l'hydroxyde de métal alcalin et des esters diméthyliques d'acide phosphonique, et le méthanol formé est éliminé par distillation.

2. Procédé selon la revendication 1, caractérisé en ce que R représente un alkyle en C₁-C₆, en particulier un alkyle en C₁-C₃.

3. Procédé selon la revendication 1, caractérisé en ce que la formule (II) désigne des esters diméthyliques d'acide méthanephosphonique, des esters diméthyliques d'acide propanephosphonique, des esters diméthyliques d'acide isopropylphosphonique, des esters diméthyliques d'acide octanephosphonique ou des esters diméthyliques d'acide tétradécanephosphonique.

4. Procédé selon au moins l'une des revendications 1 à 3, caractérisé en ce que la teneur en eau totale de la solution d'hydroxyde de métal alcalin et de la solution d'esters diméthyliques d'acide phosphonique est comprise entre 20 et 80% en poids, en particulier entre 30 et 70% en poids, de préférence entre 40 et 60% en poids, par rapport au poids de l'hydroxyde de métal alcalin et des esters diméthyliques d'acide phosphonique.

5. Procédé selon au moins l'une des revendications 1 à 4, caractérisé en ce que l'introduction en quantité mesurée est réalisée entre 100 et 115°C.

6. Procédé selon au moins l'une des revendications 1 à 5, caractérisé en ce que la vitesse d'introduction en quantité mesurée est régulée de telle sorte que l'on ne dépasse pas un pH de 10.
